Europäisches Patentamt

European Patent Office

Office européen des brevets

(11) Veröffentlichungsnummer: **0 263 400**
**A2**

(12) **EUROPÄISCHE PATENTANMELDUNG**

(21) Anmeldenummer: 87114163.6

(51) Int. Cl.4 **B29C 47/12**

(22) Anmeldetag: 29.09.87

(30) Priorität: 06.10.86 DE 3633966

(43) Veröffentlichungstag der Anmeldung:
13.04.88 Patentblatt 88/15

(84) Benannte Vertragsstaaten:
AT CH DE ES FR GB IT LI NL

(71) Anmelder: HOECHST AKTIENGESELLSCHAFT
Postfach 80 03 20
D-6230 Frankfurt am Main 80(DE)

(72) Erfinder: Hoffmann, Karl Ludwig
Peter-Bied-Strasse 43
D-6230 Frankfurt am Main 80(DE)
Erfinder: Eiden, Gunter
Am Lachgraben 37
D-6230 Frankfurt am Main 80(DE)
Erfinder: Morach, Eugen
Höhenweg 6
D-6237 Liederbach(DE)

(54) Verfahren zum Extrudieren einer Thermoplast-Schmelze.

(57) Beim Extrudieren von Thermoplast-Schmelzen können in den Extrusionswerkzeugen auftretende Fließanomalien entscheidend vermindert werden, wenn man Werkzeuge verwendet, deren mit den Schmelzen in Berührung kommende Oberflächen mit einer thermisch aufgebrachten Spritzschicht versehen ist.

EP 0 263 400 A2

## Verfahren zum Extrudieren einer Thermoplast-Schmelze

Die Erfindung betrifft ein Verfahren zum Extrudieren einer Thermoplast-Schmelze, bei welchem die Schmelze verbessertes Fließverhalten zeigt.

Bei der Extrusion von Thermoplast-Schmelzen durch formgebende Werkzeuge, beispielsweise Düsen, können aufgrund der rheologischen Eigenschaften der Schmelzen Fließanomalien, wie beispielsweise Welligkeit der Oberfläche des Extrudats, Schälen, Schmelzbruch und ähnliche Effekte auftreten. Dieses unerwünschte Verhalten mindert die Qualität der Extrudate. Die Fließanomalien werden außer durch die Fließkanalgeometrie und die Verarbeitungsbedingungen (und damit durch die rheologischen Eigenschaften der Schmelzen) auch durch die Oberflächeneigenschaften, d.h. die Benetzbarkeit, den Reibungswiderstand, die Oberflächenstruktur usw., des Werkzeugs verursacht.

Versuche, das Haften und Gleiten der Schmelzen an der Werkzeugoberfläche durch Galvanisieren, Aufdampfen von Metallen im Vakuum oder Beschichten der Werkzeugoberfläche mit Polytetrafluorethylen positiv zu beeinflussen, blieben erfolglos oder unbefriedigend, da keine ausreichende Korrosions-und/oder Verschleißbeständigkeit erreicht werden konnte. Darüber hinaus blieben derartige Beschichtungen auf Sonderfälle beschränkt. Somit werden fast auschließlich Werkzeuge aus Stahl mit geschliffener oder polierter Oberfläche eingesetzt.

Es wurde nun gefunden, daß die Fließanomalien entscheidend vermindert werden können. wenn man die Extrusion der Thermoplast-Schmelze durch ein Werkzeug vornimmt, dessen Oberfläche mit einer Spritzschicht versehen ist.

Die Erfindung betrifft somit ein Verfahren zum Extrudieren einer Thermoplast-Schmelze, bei welchem ein thermoplastischer Kunststoff in einem Extruder bei höherer Temperatur unter Scherung aufgeschmolzen und als homogene Schmelze durch ein Extrusionswerkzeug, dessen mit der Schmelze in Berührung kommende Oberfläche beschichtet ist, gefördert wird, dadurch gekennzeichnet, daß die Schmelze durch ein Werkzeug gefördert wird, dessen mit der Schmelze in Berührung kommende Oberfläche mittels eines thermischen Spritzverfahrens mit einem Pulver mit einer Korngröße von 1 bis 250 $\mu$m eines Metalls, einer Metall-Legierung, eines Metallcarbids, eines Metalloxids oder eines Cermets beschichtet wurde.

Die Erfindung betrifft weiterhin das für dieses Verfahren zu verwendende Werkzeug.

Beim erfindungsgemäßen Verfahren wird ein thermoplastischer Kunststoff in einem Extruder bei höherer Temperatur unter Scherung aufgeschmolzen und als homogene Schmelze durch das Extrusionswerkzeug gefördert.

Das Verfahren ist anwendbar auf alle Thermoplasten, beispielsweise seien die folgenden Gruppen aufgezählt:

Polymere, die sich von einfach oder doppelt ungesättigten Kohlenwasserstoffen ableiten, z.B. Polyolefine wie Polyethylen, Polypropylen, Polybuten-1, Polyisobuten, Polymethylbuten-1, Polymethylpenten-1, Polyisopren, Polybutadien, Polystyrol, Copolymere der den genannten Homopolymeren zugrundeliegenden Monomeren, wie Ethylen-Propylen-Copolymere, Propylen-Buten-1-Copolymere, Propylen-Isobuten-Copolymere, Styrol-Butadien-Copolymere sowie Terpolymere von Ethylen und Propylen mit einem Dien, wie z.B. Hexadien, Dicyclopentadien oder Ethylidennorbornen;

Mischungen der obengenannten Homopolymeren, wie beispielsweise Gemische von Polypropylen und Polyethylen, Polypropylen und Polybuten-1, Polypropylen und Polyisobuten oder von Butadien-Acrylnitril-Copolymerisaten mit einem Styrol-Butadien-Copolymerisat.

Halogenhaltige Vinylpolymere, wie Polyvinylchlorid, Polyvinylidenchlorid, Polyvinylfluorid, Polychloropren, Chlorkautschuke sowie Copolymere von Vinylchlorid und Vinylidenchlorid untereinander und mit anderen olefinisch ungesättigten Monomeren.

Polymere, die sich von $\alpha,\beta$-ungesättigten Säuren und deren Derivaten ableiten, wie Polyacrylate und Polymethacrylate, Polyacrylamide und Polyacrylnitril sowie deren Copolymere untereinander und mit anderen Vinylverbindungen, wie Acrylnitril-Butadien-Styrol-, Acrylnitril-Styrol-und Acrylnitril-Styrol-Acrylester-Copolymerisate.

Polymere, die sich von ungesättigten Alkoholen und Aminen bzw. deren Acrylderivaten oder Acetalen ableiten, wie Polyvinylalkohol, Polyvinylacetat -stearat, -benzoat, -maleat, Polyvinylbutyral Polyallylphthalat, Polyallylmelamin und deren Copolymere mit anderen Vinylverbindungen, wie Ethylen-Vinylverbindungen, wie Ethylen-Vinylacetat-Copolymere. Homo-und Copolymere, die sich von Epoxiden ableiten, wie Polyethylenoxid oder die Polymerisate, die sich von Bisglycidylethern ableiten.

Polyacetale, wie Polyoximethylen und Polyoxiethylen sowie solche Polyoximethylene, die als Comonomeres Ethylenoxid enthalten.

Polyurethane und Polyharnstoffe

Polycarbonat

Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10. Polyamid 11, Polyamid 12.

Polyester, die sich von Dicarbonsäuren und Dialkoholen und/oder von Hydroxicarbonsäuren oder den entsprechenden Lactonen ableiten, wie Polyethylenterephthalat, Polybutylenterephthalat, Poly-1,4-dimethylolcyclohexanterephthalat.

Die Extrusion der vorgenannten Thermoplasten erfolgt bei einer Temperatur von ca. 100 °C bis ca. 300 °C, je nach Art des Thermoplasten.

Die für das erfindungsgemäße Verfahren zu verwendenden Werkzeuge sind Düsen und Spritz-und Blasköpfe. Ihre Bauart ist allgemein bekannt. Sie werden für die Herstellung von Rohren, Profilen und Hohlkörper-Vorformlingen eingesetzt. Die mit der Thermoplast-Schmelze in Berührung kommende Oberfläche wird mittels eines thermischen Spritzverfahrens mit einem Pulver eines Metalls, einer Metall-Legierung, eines Metallcarbids, eines Metalloxids oder eines Cermats beschichtet.

Als thermisches Spritzverfahren kommen in erster Linie das Flammspritzen und das Plasmaspritzen infrage. Beim Flammspritzen wird der pulverförmige Spritzzusatz ( = Beschichtungswerkstoff) mit einer Brenngas-Sauerstoff-Flamme geschmolzen und durch das Verbrennungsgas allein oder mit gleichzeitiger Unterstützung durch ein Zerstäubergas (z.B. Druckluft) auf die Werkstückoberfläche geschleudert. Beim Plasmaspritzen wird der pulverförmige Spritzzusatz in oder außerhalb der Spritzpistole durch einen Plasmastrahl geschmolzen und auf die Werkstückoberfläche geschleudert.

Das Plasma wird durch einen im Gas oder im Gasgemisch brennenden Lichtbogen erzeugt, beschleunigt, gebündelt und verläßt als Plasmastrahl hoher Energiedichte die Spritzdüse.

Geeignete pulverförmige Metalle sind Titan, Niob. Tantal, Chrom, Molybdän, Wolfram, Nickel, Kupfer, Aluminium und Silizium.

Geeignete pulverförmige Legierungen sind Nickel-Chrom, Nickel-Aluminium, Kupfer-Aluminium, Kupfer-Zinn, Kobalt-Chrom-Wolfram, Aluminium-Silizium.

Als Metallcarbide sind zu nennen Wolframcarbid und Chromcarbid.

Geeignete Metalloxide sind Aluminiumoxid Aluminiumoxid-Titandioxid Aluminiumoxid-Chromoxid, Aluminiumoxid-Magnesiumoxid, Chromoxid, Chromoxid-Titandioxid, Titandioxid, Bariumoxid-Titandioxid, Zirkonoxid-Calciumoxid, Zirkonoxid-Magnesiumoxid, Zirkonoxid-Siliziumdioxid, Zirkonoxid-Yttriumoxid.

Weiterhin sind geeignet Pulver von Cermets, das sind Zweiphasensysteme aus Oxiden, Carbiden, Boriden, Siliziden, Nitriden und Metallen, beispielsweise Aluminiumoxid und Aluminium, Beryllium, Kobalt, Chrom, Eisen, Chrom-Nickel-Eisen,

Chromoxid und Chrom,

Magnesiumoxid und Aluminium, Beryllium, Kobalt, Eisen,

Magnesium,

Siliziumoxid und Chrom, Silizium,

Zirkonoxid und Zirkon,

Siliziumcarbid und Aluminium, Silizium, Kobalt, Chrom. Titancarbid und Molybdän, Wolfram, Eisen, Chrom, Nickel, Kobalt.

Chromcarbid und Nickel,

Tantalcarbid und Nickel, Eisen, Kobalt,

Chromborid und Nickel, Nickel-Aluminium,

Titanborid und Eisen, Nickel, Kobalt,

Zirkonborid und Eisen, Nickel, Kobalt, Nickel-Aluminium, Molybdänsilicid und Nickel, Kobalt, Platin, Eisen, Chrom, Titannitrid und Nickel.

Der pulverförmige Spritzzusatz kann als reines Pulver oder als Pulvergemisch eingesetzt werden. Auch ist es möglich, agglomerierte oder umhüllte Pulver zu verwenden.

Bevorzugt verwendet wird Aluminiumoxid-Titandioxid.

Die Korngröße des pulverförmigen Spritzzusatzes beträgt vorteilhafterweise 1 bis 250 μm, bevorzugt 1 bis 90 μm, insbesondere 5 bis 45 μm. Maßgebend für die Wahl der Korngröße ist unter anderem die geforderte Rauhigkeit der Spritzschicht, welche ohne Nachbearbeitung ca. 70 μm beträgt. Bei Bedarf kann die Rauhigkeit durch Nachbearbeitung, z.B. Schleifen, auf unter 1 μm gesenkt werden.

Durch das erfindungsgemäße Verfahren unter Verwendung des erfindungsgemäßen Werkzeugs werden die Fließeigenschaften von Thermoplast-Schmelzen so beeinflußt, daß Fließanomalien an der Oberfläche des Extrudats entscheidend vermindert oder ganz unterdrückt werden. Gleichzeitig wird der Ausstoß erhöht. Es hat ferner den Vorteil, daß das zu verwendende Werkzeug nicht aus einer speziellen Legierung bestehen muß. sondern aus einem preiswerten Grundwerkstoff bestehen kann, welcher entsprechend den speziellen Erfindernissen der zu extrudierenden Thermoplast-Schmelze mit geeigneten Spritzschichten versehen werden kann. Außerdem können beschädigte oder verschlissene Werkzeuge billig und schnell regeneriert werden.

Beispiel

Auf einer Hohlkörperblasanlage (Extruderschnecke 90 mm, 20 D; Temperaturen im Extruderzylinder 160 bis 200 °C bzw 210 bis 230 °C;) wurden 60 l Kanister hergestellt. Dazu wurden im Extruderkopf verschiedene Düsen verwendet:

A: Trompetenform, Stahl, unbeschichtet,

B: Trompetenform, Stahl, mit Schmelze in Berührung kommende Oberflächen durch Strahlen mit Korund angerauht und mittels Plasmaspritzen mit Aluminiumoxid-Titandioxid (Korngröße 6 bis 22 μm) beschichtet.

Extrudiert wurden zwei verschiedene Ethylenpolymerisate:

I: Homopolymerisat, hochmolekular, MFI 190/2 = 2 g/10 min, Dichte 0,950 g/cm$^3$

II: Copolymerisat, hochmolekular, MFI 190/2 = 5 g/10 min, Dichte 0,946 g/cm$^3$

Der aus der Düse austretende Schlauch wurde visuell beurteilt.

| Bewertung | Welligkeit |
| --- | --- |
| 1 | keine Wellenbildung |
| 2 | schwach wellig |
| 3 | leicht wellig |
| 4 | wellig |
| 5 | stark wellig |
| 6 | extrem wellig |

Außerdem wurde der Ausstoß gemessen. Die Ergebnisse der Versuche sind in den folgenden Tabellen zusammengestellt.

4

Tabelle 1

Abhängigkeit der Ausstoßmenge vom Ausstoßdruck und von der Düsenoberfläche

Düsen A und B, Material II

| Ausstoßdruck | Ausstoßmenge [kg/sec.] | |
|---|---|---|
| [bar] | Düse A | Düse B |
| 50 | 0,1 | - |
| 60 | 0,2 | 0,2 |
| 70 | 0,3 | 0,3 |
| 80 | 0,4 | 0,4 |
| 90 | 0,6 | 0,5 |
| 100 | 0,8 | 0,9 |
| 110 | 1,1 | 1,3 |
| 120 | 1,4 | 2,0 |
| 130 | 1,7 | 2,7 |

Tabelle 2

Welligkeit der Extrudatoberflächen in Abhängigkeit von Ausstoßdruck

Düsen A und B, Material II

| Ausstoßdruck | Düse A | | Düse B | |
|---|---|---|---|---|
| | Welligkeit innen | außen | innen | außen |
| 50 | 2 | 2 | - | - |
| 60 | 2 | 1 | 2 | 1-2 |
| 70 | 4 | 3 | 2 | 1-2 |
| 80 | 3 | 4 | 1 | 1 |
| 90 | 2 | 2 | 1 | 1 |
| 100 | 1 | 2 | 1 | 1 |
| 110 | 1 | 2 | 1 | 1-2 |
| 120 | 1 | 2 | 1 | 1-2 |
| 130 | 1 | 2 | 1 | 2 |

Tabelle III

Welligkeit der Extrudatoberflächen in Abhängigkeit vom Ausstoßdruck

Düse B, Material I

| Ausstoßdruck | Welligkeit | |
|---|---|---|
| | innen | außen |
| 50 | 1-2 | 1-2 |
| 60 | 2-3 | 1-2 |
| 70 | 2-3 | 1-2 |
| 80 | 2 | 2 |
| 90 | 2 | 2 |
| 100 | 2 | 2 |
| 110 | 2 | 1-2 |
| 120 | 2 | 1-2 |
| 130 | 2 | 1-2 |

## Ansprüche

1. Verfahren zum Extrudieren einer Thermoplast-Schmelze, bei welchem ein thermoplastischer Kunststoff in einem Extruder bei höherer Temperatur unter Scherung aufgeschmolzen und als homogene Schmelze durch ein Extrusionswerkzeug, dessen mit der Schmelze in Berührung kommende Oberfläche beschichtet ist, gefördert wird, dadurch gekennzeichnet, daß die Schmelze durch ein Werkzeug gefördert wird, dessen mit der Schmelze in Berührung kommende Oberfläche mittels eines thermischen Spritzverfahrens mit einem Pulver mit einer Korngröße von 1 bis 250 μm eines Metalls, einer Metall-Legierung, eines Metallcarbids, eines Metalloxids oder eines Cermets beschichtet wurde.

2. Verfahren nach Anspruch 1, dadurch gekennzeichnet, daß die Schmelze durch ein Werkzeug gefördert wird, dessen mit der Schmelze in Berührung kommende Oberfläche mit einem Aluminiumoxid-Titandioxid-Pulvergemisch beschichtet wurde.

3. Extrusionswerkzeug, dadurch gekennzeichnet, daß dessen mit der Thermoplast-Schmelze in Berührung kommende Oberfläche mittels eines thermischen Spritzverfahren mit einem Pulver mit einer Korngröße von 1 bis 250 μm eines Metalls, einer Metall-Legierung, eines Metallcarbids, eines Metalloxids oder eines Cermets beschichtet wurde.